# EUROPÄISCHE PATENTSCHRIFT

(11) **EP 2 930 014 B1**
(45) Veröffentlichungstag und Bekanntmachung des Hinweises auf die Patenterteilung: **11.04.2018**
(21) Anmeldenummer: 15153742.0
(22) Anmeldetag: 04.02.2015
(51) Int. Cl.: B29D 30/32

(54) **Balgträgersegment zur Herstellung von Fahrzeugreifen mit einer Bombiertrommel**
Bellows holder segment for the preparation of vehicle tyres with a cambered drum
Segment de support de soufflet destiné à la fabrication de pneus de véhicule à l'aide d'un tambour à emboutir

(30) Priorität: 08.04.2014 DE 102014206732
(43) Veröffentlichungstag der Anmeldung: 14.10.2015
(73) Patentinhaber: Continental Reifen Deutschland GmbH, 30165 Hannover (DE)
(72) Erfinder: Pfau, Andreas, 31867 Lauenau (DE); Mauruschat, Rainer, 30826 Garbsen (DE)
(74) Vertreter: Widjaja, Wira

(56) Entgegenhaltungen:
- DE-A1- 1 778 224
- DE-B- 1 089 152
- DE-B- 1 247 615
- DE-B1- 1 579 291
- SU-A1- 717 851

## Beschreibung

Die Erfindung betrifft einen Bombierkopf zur Herstellung von Fahrzeugreifen mit einer Bombiertrommel.

Bei konventionellen Fahrzeugreifen ist bekannt die Einlage im Reifenwulst um einen Wulstkern herumzuschlagen. Dadurch wird die Einlage bzw. die Karkasslage fest im Reifenwulst verankert. Solche herkömmlichen Fahrzeugreifen werden dadurch hergestellt, dass zunächst die Innenschicht und die Einlagen als breite Materiallagen auf einer Reifenaufbautrommel angeordnet werden. Anschließend wird der Wulstkern auf die Einlage gesetzt und das Einlagenende um den Kern herumgeschlagen.

Bei der konventionellen Reifenherstellung wird bei einem Verfahrensschritt das Einlagenende von der Reifeninnenseite um den Wulstkern herumgeschlagen. Bei einem zweistufigen Verfahren zur Herstellung von Fahrzeugreifen wird die Reifenkarkasse auf einer separaten Karkasstrommel aufgebaut. Eine solche Karkasstrommel ist in der Regel relativ komplex aufgebaut.

Aus der DE 1 247 615 ist eine Vorrichtung zum Aufbauen eines Fahrzeugreifens bekannt, welche eine im Durchmesser veränderbare Aufbautrommel mit seitlich der Trommel angeordneten Blähkörpern sowie auf die Blähkörper einwirkende Schiebeelemente aufweist. Zum Umschlagen der Karkasslage um die Wulstkerne werden die Blähkörper aufgebläht.

Die aus der DE 1 579 291 bekannte Vorrichtung zum Reifenaufbau umfasst eine Aufbautrommel sowie mehrere miteinander gelenkig verbundene Hebel zum Umschlagen der Karkasslage. Nach dem Umschlagen fährt eine an einem der Hebel angeordnete Wendelfeder an der die Außenseite des Karkasshochschlages entlang, um ein dichtes Anpressen der Karkasslage zu bewirken. Eine weitere Reifenaufbauvorrichtung mit Blähkörpern zum Umschlagen der Karkasslage ist aus der SU 717 851 A1 bekannt.

Bei den herkömmlichen Reifenaufbauverfahren werden auf der Karkasstrommel beide Seitenwände aufgewickelt. Anschließend wird die Reifenkarkasse mit den bereits applizierten Seitenwänden zu der Bombiertrommel verfahren.
Bei dem Reifenaufbau auf der Bombiertrommel kann es zu Problemen bei der Umschlingung von Seitenwand- und Karkasseinlage um den Reifenkern kommen.

Der Erfindung liegt die Aufgabe zugrunde, eine Vorrichtung bereitzustellen, mit dem die Herstellung von Reifen verbessert wird.

Gelöst wird die Aufgabe gemäß Anspruch 1 dadurch, dass am vorderen Ende des Balgträgersegmentes im Andrückbereich zum Reifenwulst zwischen dem vorderen Teil des Hebelarmes und der Innenseite des Andrückteiles im Andrückteil ein hochelastischer Bereich in Form einer Materialaussparung angeordnet ist,
wobei das Andrückteil beim Andrückvorgang an den Reifenwulst mit einer hohen Flexibilität in die Materialaussparung gedrückt werden kann. Ein Vorteil der Erfindung ist insbesondere darin zu sehen, dass durch die neue Gestaltung des Balgträgersegmentes die Herstellung von Fahrzeugreifen mit einer Bombiertrommel wesentlich verbessert wird. Das Andrückteil kann sich bei der Schulterbildung des Reifenrohlings auf der Bombiertrommel optimal an den bombierten Reifenrohling anpassen. Das gilt insbesondere für Fahrzeugreifen, die im Bereich des Reifenwulstes oder der Seitenwand eine sogenannte Felgenrippe aufweisen. Die optimale Anpassung des Andrückteiles, welches ebenfalls als Schulterring bezeichnet wird, wird insbesondere durch den hoch elastischen Bereich des Andrückteiles, in Form einer Materialaussparung gewährleistet. Dadurch kann sich das Andrückteil optimal der äußeren Kontur des Reifenwulstes, bzw. der Seitenwand anpassen. Die Materialaussparung im Bereich des Andrückteiles lässt sich außerdem auf einfache Weise umsetzten und mit dem Hebelarm des Balgträgersegmentes kombinieren. Außerdem lässt sich das neuartige Balgträgersegment optimal für die Herstellung von Fahrzeugreifen mit einem Niederquerschnitt einsetzen. Bei dieser Art von Reifen ist es besonders wichtig, dass bei der Schulterbildung der Schulterring weiter unten im Reifenwulst ansetzten kann. Mit dem Balgträgersegment lassen sich außerdem Lufteinschlüsse im Reifenwulst vermeiden.

In einer vorteilhaften Weiterbildung der Erfindung ist vorgesehen, dass die Halterung für das Andrückteil ein massives Andrückelement aufweist,
wobei die Breitenausdehung des Andrückelementes zwischen 5 und 15 mm, vorzugweise zwischen 6 und 8 mm, beträgt.
Durch die massive Ausgestaltung des Andrückelementes lässt sich ein optimaler Anpressdruck auf den Reifenwulst realisieren.

In einer weiteren vorteilhaften Weiterbildung der Erfindung ist vorgesehen, dass am vorderen Ende des Hebelarms ein Nasenelement zur Begrenzung der elastischen Bewegung des Andrückteiles angeordnet ist.
Dadurch wird sichergestellt, dass das untere Teil des Andrückteiles nicht vom Hebelarm abrutscht.

In einer weiteren vorteilhaften Weiterbildung der Erfindung ist vorgesehen, dass die Längenausdehnung des Nasenelementes in Längsausrichtung des Hebelarmes kürzer ist als die Längenausdehnung des Andrückelementes am Hebelarm.
Dadurch wird sichergestellt, dass das Andrückteil den Anpressdruck auf den Reifenwulst aufbringt.

In einer weiteren vorteilhaften Weiterbildung der Erfindung ist vorgesehen, dass zwischen der Vorderseite des Andrückelementes und der innenliegenden Seite des Andrückteiles ein Spalt mit einer Dicke zwischen 1 und 4 mm angeordnet ist.
Mit dem Spalt wird eine optimale Flexibilität im Bereich vor dem Andrückteil erreicht.

In einer weiteren vorteilhaften Weiterbildung der Erfindung ist vorgesehen, dass der Spalt an der Vorderseite des Andrückelementes mit der Materialaussparung verbunden ist.
Auf diese Weise erhält das Andrückteil eine optimale Elastizität.

In einer weiteren vorteilhaften Weiterbildung der Erfindung ist vorgesehen, dass die Materialaussparung an der breitesten Stelle eine Breitenausdehnung zwischen 1 und 15 mm aufweist.
Dadurch besitzt das Andrückteil eine optimale Materialflexibilität.

In einer weiteren vorteilhaften Weiterbildung der Erfindung ist vorgesehen, dass die Materialaussparung und/oder das Andrückteil ein elastisches Material in Form eines Moosgummis aufweist.
Dadurch lässt sich die Materialflexibilität des Andrückteiles in Verbindung mit dem Hebelarm verbessern.

In einer weiteren vorteilhaften Weiterbildung der Erfindung ist vorgesehen, dass die Materialaussparung und/oder das Andrückteil ein luftbefüllten Balg aufweist.
Dadurch lässt sich die Materialflexibilität des Andrückteiles steigern.

Anhand eines Ausführungsbeispieles soll die Erfindung näher erläutert werden. Es zeigt:

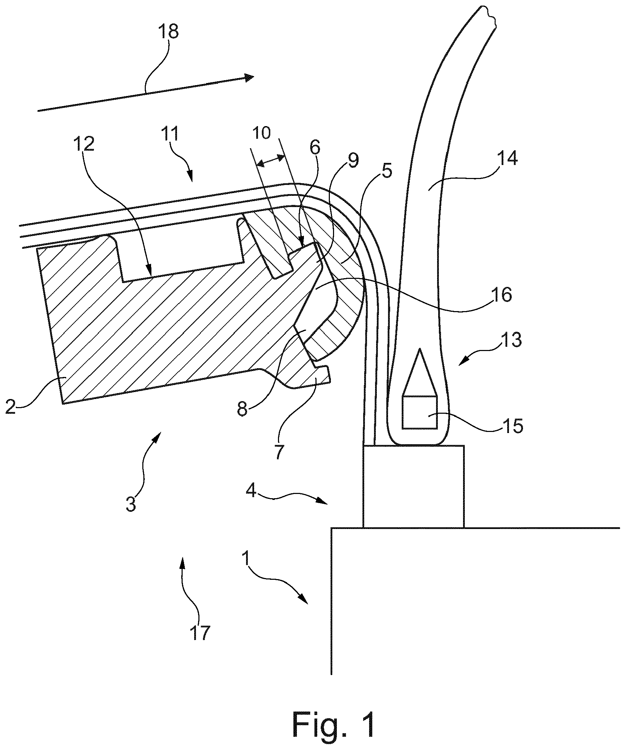

Figuren 1: den Bombierkopf bzw. die Bombiertrommel

Die Figur 1 zeigt das vordere Teil des Balgträgersegmentes in einer Querschnittsansicht. Das Balgträgersegment 3 umfasst das vordere Teil 2 des Hebelarmes und das Andrückteil 5, welches aus einem Hartgummi besteht. Das Andrückteil 5 wird ebenfalls als Schulterring bezeichnet. Am vorderen Teil des Hebelarms 2 ist eine Halterung 6 für das Andrückteil 5 angeordnet. Die Halterung 6 dient unter anderem dazu das Andrückteil 5 formschlüssig am Hebelarm 2 zu fixieren. Außerdem weist die Halterung 6 ein Andrückelement 16 auf, welches eine Breitenausdehnung 10 besitzt. Zwischen dem vorderem Teil 2 des Hebelarmes und der innenliegenden Seite des Andrückteiles 5 ist die Materialaussparung 8 angeordnet, die die hohe Materialflexibilität des Andrückteiles 5 gewährleistet. Die Materialaussparung 8 ist mit dem Spalt 9 verbunden, der vor dem Andrückelement 16 angeordnet ist. Auf der Unterseite des vorderen Teiles 2 des Hebelarmes ist ein Nasenelement 7 angeordnet, welches zur Begrenzung der elastischen Bewegung des Andrückteiles 5 eingesetzt wird. In der Figur ist der Vorgang der Schulterbildung an dem bombierten Reifenrohling dargestellt. Die Bombiertrommel 1 weist unter anderem Kernklemmsegmente 4 auf, auf denen beidseitig der Reifenwulst 13 fixiert wird. Nach dem Bombiervorgang der Reifenkarkasse auf der Bombiertrommel 1 erfolgt die dargestellte Schulterbildung mit dem Balgträgersegment. Die Balgträgersegmente 3 werden mit dem Seitenbombierbalg 11 abgedeckt.

Vor dem Bombiervorgang der Reifenkarkasse auf der Bombiertrommel werden die Balgträgersegmente 3 in radialer Richtung 17 expandiert. Bei diesem Vorgang erfolgt die Schulterbildung bei der ein Anpressdruck mit dem Andrückteil 5 auf den Reifenwulst, bzw. auf die darüberliegende Seitenwand aufgebracht wird. Durch die elastische Ausführung des Andrückteiles 5 kann sich das Andrückteil 5 optimal an die Außenkontur des Reifenwulstes anpassen. Nach der Schulterbildung erfolgt das Hochschlagen der nicht dargestellten Seitenwände an der bombierten Reifenkarkasse.

### Bezugszeichenliste

### (ist Teil der Beschreibung)

- 1: Bombiertrommel bzw. Bombierkopf
- 2: Vorderes Teil des Hebelarmes
- 3: Balgträgersegment
- 4: Segemente für Kernklemmung bzw. Kernklemmsegment
- 5: Andrückteil aus Hartgummi
- 6: Halterung für Andrückteil
- 7: Nasenelement
- 8: Materialaussparung
- 9: Spalt
- 10: Breitenausdehnung des Andrückelementes
- 11: Seitenbombierbalg
- 12: Aussparung bzw. Luftleiste am Hebelarm
- 13: Reifenwulst
- 14: Reifenkarkasse im bombierten Zustand
- 15: Reifenkern mit Apex
- 16: Andrückelement an der Halterung
- 17: Radiale Richtung
- 18: Längsausrichtung

## Patentansprüche

1. Balgträgersegment (3) zur Herstellung von Fahrzeugreifen mit einer Bombiertrommel (1) und Seitenbombierbälgen (11),
wobei das Balgträgersegment (3) einen Hebelarm (2) und ein Andrückteil (5) aus Gummimaterial umfasst,
wobei der Hebelarm (2) am vorderen Ende eine Halterung (6) aufweist,
wobei das Andrückteil (5) formschlüssig an der Halterung (6) und am vorderen Ende des Hebelarms (2) angeordnet ist,
**dadurch gekennzeichnet, dass**
am vorderen Ende des Balgträgersegmentes (3) im Andrückbereich zum Reifenwulst zwischen dem vorderen Teil des Hebelarmes (2) und der Innenseite des Andrückteiles (5) im Andrückteil (5) ein hochelastischer Bereich in Form einer Materialaussparung (8) angeordnet ist,
wobei das Andrückteil (5) beim Andrückvorgang an den Reifenwulst mit einer hohen Flexibilität in die Materialaussparung (8) gedrückt werden kann.

2. Balgträgersegment nach Anspruch 1,
**dadurch gekennzeichnet, dass**
die Halterung (6) für das Andrückteil (5) ein massives Andrückelement (16) aufweist, wobei die Breitenausdehung (10) des Andrückelementes (16) zwischen 5 und 15 mm, vorzugweise zwischen 6 und 8 mm, beträgt.

3. Balgträgersegment nach einem der vorhergehenden Ansprüche,
**dadurch gekennzeichnet, dass**
am vorderen Ende des Hebelarms (2) ein Nasenelement (7) zur Begrenzung der elastischen Bewegung des Andrückteiles (5) angeordnet ist.

4. Balgträgersegment nach Anspruch 3,
**dadurch gekennzeichnet, dass**
die Längenausdehnung des Nasenelementes (7) in Längsausrichtung (18) des Hebelarmes (2) kürzer ist als die Längenausdehnung des Andrückelementes (16) am Hebelarm (2).

5. Balgträgersegment nach Anspruch 2 oder 3,
**dadurch gekennzeichnet, dass**
zwischen der Vorderseite des Andrückelementes (16) und der innenliegenden Seite des Andrückteiles (5) ein Spalt (9) mit einer Dicke zwischen 1 und 4 mm angeordnet ist.

6. Balgträgersegment nach Anspruch 5,
**dadurch gekennzeichnet, dass**
der Spalt (9) an der Vorderseite des Andrückelementes ohne Unterbrechung mit der Materialaussparung (8) verbunden ist.

7. Balgträgersegment nach einem der vorhergehenden Ansprüche,
**dadurch gekennzeichnet, dass**
die Materialaussparung (8) an der breitesten Stelle eine Breitenausdehnung zwischen 1 und 15 mm aufweist.

8. Balgträgersegment nach einem der vorhergehenden Ansprüche,
**dadurch gekennzeichnet, dass**
die Materialaussparung (8) und/oder das Andrückteil (5) ein elastisches Material in Form eines Moosgummis aufweist.

9. Balgträgersegment nach einem der vorhergehenden Ansprüche,
**dadurch gekennzeichnet, dass**
die Materialaussparung (8) und/oder das Andrückteil (5) einen luftbefüllten Balg aufweist.

## Claims

1. Bladder support segment (3) for producing vehicle tyres with a shaping drum (1) and side shaping bladders (11),
wherein the bladder support segment (3) comprises a lever arm (2) and a pressure-exerting part (5) of rubber material,
wherein the lever arm (2) has a mounting (6) at the front end,
wherein the pressure-exerting part (5) is arranged with form-fitting engagement at the mounting (6) and at the front end of the lever arm (2), **characterized in that**
a highly elastic region in the form of a material clearance (8) is arranged in the pressure-exerting part (5) at the front end of the bladder support segment (3) in the pressure-exerting region with respect to the tyre bead between the front part of the lever arm (2) and the inner side of the pressure-exerting part (5),
wherein, during the process of exerting pressure on the tyre bead, the pressure-exerting part (5) can be pressed with great flexibility into the material clearance (8).

2. Bladder support segment according to Claim 1, **characterized in that** the mounting (6) for the pressure-exerting part (5) has a solid pressure-exerting element (16), wherein the widthwise extent (10) of the pressure-exerting element (16) is between 5 and 15 mm, preferably between 6 and 8 mm.

3. Bladder support segment according to one of the preceding claims,
**characterized in that**
a lug element (7) for limiting the elastic movement of the pressure-exerting part (5) is arranged at the front end of the lever arm (2).

4. Bladder support segment according to Claim 3,
**characterized in that**
the lengthwise extent of the lug element (7) in the longitudinal alignment (18) of the lever arm (2) is shorter than the lengthwise extent of the pressure-exerting element (16) on the lever arm (2).

5. Bladder support segment according to Claim 2 or 3,
**characterized in that**
a gap (9) with a thickness of between 1 and 4 mm is arranged between the front side of the pressure-exerting element (16) and the inner-lying side of the pressure-exerting part (5).

6. Bladder support segment according to Claim 5,
**characterized in that**
on the front side of the pressure-exerting element, the gap (9) is connected uninterruptedly to the material clearance (8).

7. Bladder support segment according to one of the preceding claims,
**characterized in that**
the material clearance (8) has at the widest point a widthwise extent of between 1 and 15 mm.

8. Bladder support segment according to one of the preceding claims,
**characterized in that**
the material clearance (8) and/or the pressure-exerting part (5) comprise(s) an elastic material in the form of a sponge rubber.

9. Bladder support segment according to one of the preceding claims,
**characterized in that**
the material clearance (8) and/or the pressure-exerting part (5) comprise(s) an air-filled bladder.

## Revendications

1. Segment de support de soufflet (3) pour la fabrication de pneus de véhicules, comprenant un tambour de bombage (1) et des soufflets de bombage latéraux (11), le segment de support de soufflet (3) comprenant un bras de levier (2) et une pièce de pressage (5) en matériau en caoutchouc,
le bras de levier (2) présentant à l'extrémité avant une fixation (6),
la pièce de pressage (5) étant disposée par engagement par correspondance géométrique sur la fixation (6) et à l'extrémité avant du bras de levier (2),
**caractérisé en ce**
**qu'**une région de grande élasticité sous la forme d'un évidement de matériau (8) est disposée dans la pièce de pressage (5) à l'extrémité avant du segment de support de soufflet (3) dans la région de pressage vers le talon de pneu entre la partie avant du bras de levier (2) et le côté intérieur de la pièce de pressage (5),
la pièce de pressage (5), lors d'une opération de pressage sur le talon de pneu, pouvant être pressée avec une grande flexibilité dans l'évidement de matériau (8).

2. Segment de support de soufflet selon la revendication 1,
**caractérisé en ce que**
la fixation (6) pour la pièce de pressage (5) présente un élément de pressage massif (16), l'étendue en largeur (10) de l'élément de pressage (16) étant comprise entre 5 et 15 mm, de préférence entre 6 et 8 mm.

3. Segment de support de soufflet selon l'une quelconque des revendications précédentes,
**caractérisé en ce**
**qu'**à l'extrémité avant du bras de levier (2) est disposé un élément de nez (7) pour limiter le mouvement élastique de la pièce de pressage (5).

4. Segment de support de soufflet selon la revendication 3,
**caractérisé en ce que**
l'étendue en longueur de l'élément de nez (7) dans la direction longitudinale (18) du bras de levier (2) est plus courte que l'étendue en longueur de l'élément de pressage (16) sur le bras de levier (2) .

5. Segment de support de soufflet selon la revendication 2 ou 3,
**caractérisé en ce**
**qu'**entre le côté avant de l'élément de pressage (16) et le côté intérieur de la pièce de pressage (5) est disposée une fente (9) ayant une épaisseur comprise entre 1 et 4 mm.

6. Segment de support de soufflet selon la revendication 5,
**caractérisé en ce que**
la fente (9) au niveau du côté avant de l'élément de pressage est connectée sans interruption à l'évidement de matériau (8).

7. Segment de support de soufflet selon l'une quelconque des revendications précédentes,
**caractérisé en ce que**
l'évidement de matériau (8) à l'emplacement le plus large présente une étendue en largeur comprise entre 1 et 15 mm.

8. Segment de support de soufflet selon l'une quelconque des revendications précédentes,
**caractérisé en ce que**
l'évidement de matériau (8) et/ou la pièce de pressage (5) présentent un matériau élastique sous la forme d'un caoutchouc mousse.

9. Segment de support de soufflet selon l'une quelconque des revendications précédentes,
**caractérisé en ce que**
l'évidement de matériau (8) et/ou la pièce de pressage (5) présentent un soufflet rempli d'air.
